Europäisches Patentamt

European Patent Office

Office européen des brevets

(11) Veröffentlichungsnummer: **0 634 842 A2**

(12) **EUROPÄISCHE PATENTANMELDUNG**

(21) Anmeldenummer: **94110569.4**

(22) Anmeldetag: **07.07.94**

(51) Int. Cl.⁶: **H04B 3/54**, H04L 7/10

(30) Priorität: **13.07.93 DE 4323376**

(43) Veröffentlichungstag der Anmeldung:
**18.01.95 Patentblatt 95/03**

(84) Benannte Vertragsstaaten:
**AT CH DE ES FR GB IT LI NL SE**

(71) Anmelder: **ABB PATENT GmbH**
**Kallstadter Strasse 1**
**D-68309 Mannheim (DE)**

(72) Erfinder: **Dostert, Klaus, Prof. Dr.**
**Bergstrasse 13**
**D-67706 Krickenbach (DE)**

(74) Vertreter: **Rupprecht, Klaus, Dipl.-Ing. et al**
**c/o ABB Patent GmbH,**
**Postfach 10 03 51**
**D-68128 Mannheim (DE)**

(54) **Verfahren und Einrichtung zur störsicheren bidirektionalen Informationsübertragung über Stromversorgungsnetze.**

(57) Der Erfindung liegt ein Verfahren zur störsicheren bidirektionalen Übertragung digitaler Informationen über Stromversorgungsnetze zugrunde, aus dem eine vorteilhaft konzipierte Einrichtung hervorgeht, bei der sowohl die Sendesignale digital erzeugt und die Empfangssignale korrelativ digital verarbeitet werden. Erfindungsgemäß wird dabei ein Großteil der Systemressourcen sowohl zum Sende- als auch zum Empfangsbetrieb genutzt. Die Erfindung führt auf ein Modemkonzept mit hoher Flexibilität hinsichtlich der wichtigsten Systemparameter wie Datenrate, Störresistenz, Signalformgestaltung und Frequenzwahl.

Ein erfindungsgemäß aufgebautes Modem enthält als Hauptteile einen mit der Netzwechselspannung synchronisierten Signalformsynthesizer (12, 13), ein Arithmetik-Schaltwerk (8) zur korrelativen digitalen Empfangssignalverarbeitung einen Mikroconroller, Mikroprozessor oder eine Digitalschaltung vergleichbarer Funktion (10). Neben dem Signalformsynthesizer (12, 13) und der Digitalschaltung (10) werden ein Koppler (2) und ein Netznulldurchgangsdetektor (25) sowohl im Sende- als auch im Empfangsbetrieb genutzt. Das Vorhandensein eines Mikrocontrollers gestattet den vorteilhaften Aufbau des Sendeteils mit geringem Aufwand.

Fig. 1

EP 0 634 842 A2

Die Erfindung betrifft ein Verfahren und eine Einrichtung zum Senden umd Empfangen von digitalen Informationen über Stromversorgungsnetze im Halbduplex-Betrieb, wobei schmalbandige oder auch bandspreizende Modulationsverfahren eingesetzt werden können. Die Nachrichtenübertragungsverfahren "Frequenzsprungmodulation" oder "Frequenzumtastung" z. B. haben sich an zahlreichen Versuchsstrecken bereits in der Praxis bewährt.

Es ist Stand der Technik, zur Informationsübertragung über Stromversorgungsnetze Systeme mit schmalbandiger oder auch mit breitbandiger, bandspreizender Modulation einzusetzen - siehe z. B. die Druckschriften DE 40 01 265 A1, DE 40 01 266 A1, EP 0 200 016 B1 und EP 0 199 148 B1.

Untersuchungen des Erfinders an zahlreichen Stromnetzen verschiedener Ausdehnung und Beschaffenheit - innerhalb und außerhalb von Gebäuden - haben gezeigt, daß das Bandspreizverfahren "Frequenzsprungmodulation" (engl.: frequency hopping) anderen Verfahren wie z. B. "pseudozufällige Phasensprungmodulation" (engl.: phase hopping oder direct sequencing), die technisch einfacher zu realisieren sind, klar überlegen ist. Das gilt auch dann noch, wenn nur zwei verschiedene Signalformen mit relativ weit auseinanderliegenden Frequenzen pro Übertragungskanal zum Einsatz kommen. Das Frequenzband sollte dabei auf jeden Fall ein Mehrfaches der Datenrate betragen, also z.B. bei 1000 bit/s größer als 5 kHz sein.

Bislang war das an Stromversorgungsleitungen für Informationsübertragung verfügbare Frequenzband durch Vorschriften der Deutschen Bundespost auf 30 kHz bis 146 kHz festgelegt. Daraus ergab sich eine relativ große verfügbare Bandbreite B = 116 kHz. Seit 1. Dezember 1991 ist die europäische Norm EN 50 065-1:1991, die den Status einer deutschen Norm hat, in Kraft. Diese Norm ist die deutsche Fassung der vom Unterkomitee SC 105A "Mains communication systems" des europäischen Komitees für elektrotechnische Normung (CENELEC) erarbeiteten Norm; sie regelt die Nutzung des Frequenzbereichs 3 kHz...148,5 kHz für Signalübertragungszwecke. Nach dieser Norm wird das an Stromnetzen für Signalübertragungszwecke verfügbare Band grob in zwei Bereiche eingeteilt. Der Frequenzbereich von 3 kHz...95 kHz ist der Nutzung durch Stromversorgungsunternehmen vorbehalten; dort sind relativ hohe Sendepegel bis zu 134 dB$\mu$V zulässig. Der restliche Frequenzbereich von 95 kHz...148,5 kHz steht dem privaten Nutzer genehmigungsfrei zur Verfügung, solange der Sendepegel 116 dB$\mu$V nicht überschreitet. Dieser ziemlich niedrige zulässige Sendepegel (ca. 1V Signalamplitude) geht einher mit einer gegenüber früheren Vorschriften drastisch eingeengten Bandbreite - statt bisher 116 kHz stehen nur noch knapp 53 kHz zur Verfügung.

Diese neuen Randbedingungen stellen hohe Anforderungen an Einrichtungen zur hinreichend störsicheren Übertragung von Informationen über Stromversorgungsleitungen. Dabei liegt die technische Herausforderung hauptsächlich in der Nutzung des Bandes 95...148,5 kHz. Man kann davon ausgehen, daß ein System, das dort zuverlässig arbeitet, so konfiguriert werden kann, daß es im Band unter 95 kHz noch bessere Ergebnisse zeigt. Der entscheidende Ansatz, um alle Möglichkeiten offen zu halten, ist ein digitales Konzept, das den jeweiligen Aufgaben leicht, d.h. möglichst ohne Hardwareänderungen, anpaßbar ist. Die Lösung einer solchen Aufgabe ist Gegenstand der vorliegenden Erfindung.

**Die hohen zu erfüllenden Anforderungen verdeutlichen die beiden folgenden Systembeispiele.**

I.) Ausgangspunkt der Betrachtungen ist die bidirektionale Übertragung binärer Infomationen mit schnellen Frequenzsprüngen, d. h. während der Dauer $T_B$ eines Datenbits wird die Sendefrequenz sprungartig m-mal gewechselt, mit m = 1, 3, 5, 7... Je größer m gewählt wird, umso störresistenter erfolgt die Informationsübertragung. Bei fester Datenrate $r_D$ = $1/T_B$ ist m durch die verfügbare Bandbreite B einerseits und durch die Grenzen der Präzision bei der Synchronisation andererseits beschränkt. Auf Stromversorgungsleitungen ist das allgemein für Informationsübertragung verfügbare Frequenzband durch die europäische Norm EN 50065-1:1991 auf 95 kHz bis 148,5 kHz festgelegt, daraus ergibt sich die verfügbare Bandbreite B = 53 kHz. Wenn beispielsweise binäre Informationen mit einer Datenrate (Bitrate) $r_D$ = 60 bit/s mittels Frequenzsprungverfahren zu übertragen sind, wobei m = 5 Frequenzsprünge während einer Datenbitdauer $T_B$ erfolgen sollen, dann ist die Frequenzsprungrate h = 300 $s^{-1}$. Der Kehrwert T = 1/h der Frequenzsprungrate gibt die Dauer des Zeitintervalls an, während dessen jeweils eine der m Frequenzen gesendet wird. Die Nachrichtentheorie besagt, daß in einem Frequenzband der Breite B = 53 kHz bei der Frequenzsprungrate h = 300 $s^{-1}$ maximal eine Anzahl N = [B/h] = [53000/300] = 176 Signale mit jeweils um 300 Hz versetzter Frequenz gleichzeitig übertragen werden können und ohne gegenseitige Störbeeinflussung von Empfängern, die korrelative Signalverarbeitung durchführen, fehlerfrei detektiert werden können. [.] bedeutet ganzzahliger Anteil von (.).

An den Leitungen eines elektrischen Installationsnetzes, z. B. in einem weitläufigen Gebäude, könnten entsprechend obigem Beispiel maximal N/2 = 88 Übertragungskanäle mit einer Datenrate von je 60 bit/s gleichzeitig aktiv sein, ohne gegenseitige Störbeeinflussung. Entscheidende Voraussetzung dafür ist eine hochpräzise Signalerzeugung und das genaue Einfügen der aller Sendesignale in ein globales Zeitraster und eine entsprechend präzise korrelative Signalverarbeitung in jedem Empfänger.

II. Zum Zweck der Gebäudeautomatisierung soll ein für Nutzbauten (Schulen, Büroetagen, Krankenhäuser, Hotels etc.) konzipiertes schnell reagierendes bidirektional arbeitendes Installationsbussystem implementiert werden, das entsprechend EN 50065-1:1991 den Frequenzbereich von 95 kHz bis 148,5 kHz mit einer Datenrate von 1200 bit/s nutzt, wobei m = 3 Frequenzsprünge während einer Datenbitdauer $T_B$ erfolgen sollen; dann ist die Frequenzsprungrate h = 3600 $s^{-1}$. Jetzt können gemäß den obigen Betrachtungen im Frequenzband der Breite B = 53 kHz maximal bis zu N = [B/h] = [53000/3600] = 14 Signale mit jeweils um 3600 Hz versetzter Frequenz gleichzeitig übertragen werden. Also könnten maximal N/2 = 7 Übertragungskanäle mit einer Datenrate von je 1200 bit/s gleichzeitig aktiv sein, ohne gegenseitige Störbeeinflussung.

Die senderseitige Signalerzeugung und die empfängerseitige Signalverarbeitung verlangen bei Systemen der beschriebenen Art grundsätzlich eine Synchronisation. Im Empfangsfall ist die Synchronisation des Empfangssignals mit einem lokal im Empfänger vorhandenen Referenzsignal nötig. Im Fall der Frequenzsprungmodulation kommt dieses Referenzsignal aus einem Frequenzsynthesizer. Im Sendefall wird ebenfalls ein synchronisierter Frequenzsynthesizer benötigt, dessen informationstragende Ausgangssignale ins Stromnetz eingespeist werden. Das Problem der Synchronisation läßt sich bei Nachrichtenübertragungssystemen, die an Stromversorgungsleitungen arbeiten, mit Hilfe der Netzwechselspannung einfach und kostengünstig lösen - siehe z. B. die europäischen Patente EP 0 200 016 B1, EP 0 199 148 B1 und EP 0 507 087 A2.

Bislang wurden Sende- und Empfangsgeräte zur Informationsübertragung über Stromnetze meist separat aufgebaut. Die Hardware war unflexibel, d. h. man konnte die Datenrate, die Störesistenz - z. B. repräsentiert durch die Zahl der Frequenzen pro Bit - oder den Frequenzbereich nicht oder nur mit erheblichem Änderungsaufwand in jeweils zwei separaten Geräten modifizieren. Zudem war das Einfügen der Sendesignale in ein globales Zeitraster bei zahlreichen bekannten Systemkomponenten nicht vorgesehen. Dadurch wurde die empfängerseitige Signaldetektion erschwert und der optimale Betrieb eines Vielfachzugriffsystems nahezu ausgeschlossen.

Aufgabe der vorliegenden Erfindung ist es deshalb, ein Verfahren nach dem Oberbegriff des Anspruchs 1 und eine Einrichtung nach dem Oberbegriff des Anspruchs 8 zu schaffen, durch die mit relativ geringem technischen Aufwand wahlweise das Senden und Empfangen nachrichtentragender Signalformen am Stromnetz möglich ist und eine globale Synchronisierung mit der Netzwechselspannung als Referenz erfolgt. Dabei soll ein Höchstmaß an Flexibilität hinsichtlich der Wahl von Übertragungsgeschwindigkeit (Datenrate), Störresistenz (Zahl der Signalformenm pro Datenbit) und Frequenzwahl (Lage der benutzten Frequenzen im erlaubten Übertragungsband) gegeben sein. Diese Aufgabe wird durch die in den Ansprüchen 1 und 8 gekennzeichneten Merkmale gelöst. Zweckmäßige Ausgestaltungen und Weiterbildungen der Erfindung sind in den Unteransprüchen gekennzeichnet.

Durch die Zusammenfassung von Sender und Empfänger in einem Modem ist es möglich, für den Empfänger ohnehin benötigte Funktionen auch für den Sender zu verwenden, wobei der digitale Aufbau des Modems eine sehr flexible Anpassung im Sinne der Aufgabenstellung ermöglicht.

Aufgabe einer Sendeeinrichtung in einem Modem zur Übertragung digitaler Infomationen über Stromversorgungsleitungen ist die präzise und zeitgenaue Erzeugung einer Vielzahl von Signalen mit relativ eng benachbarten Frequenzen. Dabei muß abhängig von den zu sendenden Informationen ein rascher Frequenzwechsel möglich sein, ohne daß dabei Einschwingvorgänge auftreten. In analoger Technik aufgebaute Sendeeinrichtungen können die genannten Anforderungen nur mit unwirtschaftlich hohem Aufwand bewerkstelligen und sind zudem in hohem Maße unflexibel, wenn es z. B. um Änderungen der Datenrate oder der Sendefrequenzen geht.

Die Empfangseinrichtung des Modems muß in der Lage sein, Signale mit relativ eng benachbarten Frequenzen perfekt zu trennen und so die gesendete Information wiederzugewinnen. Dazu ist signalangepaßte Filterung auf korrelativem Wege notwendig. Das Prinzip der aktiven Korrelation ist aus Standard-Lehrbüchern hinreichend bekannt. Aus einem aktiven Korrelator, der allgemein aus einer Multiplizier- und einer Integriereinheit besteht, wird ein signalangepaßtes Filter (engl.: matched filter) z. B. für frequenzspungmodulierte Signalformen der Chipdauer T, wenn man durch Synchronisation dafür sorgt, daß die Integriereinheit an jedem Chipintervallende auf Null gesetzt wird, nachdem der während der Chipdauer aufintegrierte Wert zur Weiterverarbeitung abgetastet und gegebenenfalls gespeichert wurde. Eine Empfangseinrichtung, die diese Aufgaben erfüllt, ist in der EP 0 507 087 A2 ausführlich beschrieben. Das Kernstück der dort beschriebenen Einrichtung ist ein systolisches Arithmetik-Schaltwerk, das mit einem Mikrocontroller, einem Mikroprozessor oder ein Digitalschaltung vergleichbarer Funktion in Verbindung steht. Insgesamt ist ein digitaler Quadraturempfänger für inkohärenten Empfang realisiert. Der Aufwand für einen derartigen Empfänger in Analogtechnik wäre untragbar hoch. Denn jeder Datenbit-Zweig würde einen eigenen Quadraturempfänger, bestehend aus je zwei Analogmultiplizierern mit nachgeschalteten löschbaren Integratoren und Frequenzsynthesizern, die die "H" und "L"-Bit-Signalformen jeweils in Sinus- und in Cosinuslage bereitstellen, erfordern. Die Fertigung von Empfängern für frequenzsprungmodulierte Signalformen in Analogtechnik wäre mit Problemen der Bauteilselektion und aufwendigem Abgleich behaftet. Darüberhinaus wäre wenig Flexibilität hinsichtlich Parameteränderungen erzielbar. Bei Änderungen der Frequenzen und/oder der Chipdauer T beim verwendeten Signalformsatz wäre ein Umbau der Hardware und generell ein aufwendiger Neuabgleich nicht zu umgehen. Bisher wurde die breite Einführung von Systemem zur Datenübertragung auf Stromnetzen nicht erreicht, obwohl es an Anwendungsbedarf nicht mangelt. Es fehlte ein in sich geschlossenes, wirtschaftlich realisierbares Gesamtkonzept, das Sende- und Empfangseinrichtung in optimaler Weise in Form eines Modems in sich vereinigt. Hier soll die vorliegende Erfindung Abhilfe schaffen.

Eine entscheidende Voraussetzung bei der vorliegenden Erfindung ist, daß senderseitige Signalerzeugung und empfängerseitige korrelative Signalverarbeitung digital bewerkstelligt werden. Am Empfängereingang wird daher das Empfangssignal nach analoger Verstärkung und Filterung mit der Abtastfrequenz $f_A = 1/T_A$ abgetastet und digitalisiert, z. B. mit 8bit Auflösung. Das digitalisierte Empfangssignal wird im folgenden mit $X(kT_A)$ bezeichnet. Dabei ist $kT_A$ die diskrete Zeit, mit $k = 0,1, 2...$ Zur korrelativen Verarbeitung wird das Empfangssignal mit Abtastwerten $Y_i$ einer Referenzsignalform digital multipliziert, und das Produkt wird anschließend über die Signalformdauer - auch Chipdauer genannt - integriert, d. h. digital in einem Akkumulator aufaddiert. Dabei können die benötigten Referenzsignalabtastwerte $Y_i$ in einem digitalen Speicher, wie z. B. einem ROM, PROM, EPROM, EEPROM oder RAM abgelegt sein, und mit Hilfe eines Adreßzählers passend ausgelesen werden. Im allgemeinen entfallen auf einen Empfangssignalabtastwert $X(kT_A)$ mehrere Referenzsignalabtastwerte $Y_i$ - siehe z. B. die EP 0 507 087 A2 - dort muß jeder Abtastwert X des Empfangssignals mit vier Referenzwerten nacheinander mulipliziert werden. Die Multiplikationsergebnisse werden vier digitalen Akkumulatoren zugeführt. Dort erfolgt jeweils das Aufsummieren so, daß am Ende einer Chipdauer für den "H" und "L"-Datenbitkanal je ein Inphase- oder ein Quadratursignal (HI, HQ; LI, LQ) in digitaler Form zur Verfügung steht. Nach jeweils geometrischer Addition von HI, HQ und LI, LQ kann die Chip-Entscheidung durchgeführt werden. Nach Empfang von m Chips kann dann eine Mehrheitsentscheidung zur Ermittlung des mit größter Wahrscheinlichkeit gesendeten Datenbits erfolgen. In der EP 0 507 087 A2 ist ein Arithmetik-Schaltwerk offenbart, das aus n Registern und einem geeignet in n Teilnetze partitionierten Schaltnetz besteht, wobei die Teilnetze jeweils zwischen die Register eingefügt sind. Das gesamte Schaltnetz führt Rechenoperationen der Form $X \cdot Y_i + A_i$ aus, wobei $A_i$ jeweils der bisher aufgelaufene Akkumulatorinhalt ist. Es ist vorteilhaft, das beschriebene Schaltnetz auf einer anwendungsspezifischen integrierten Schaltung zu implementieren. Dabei kann ein im folgenden vorgestellter Adreßzähler leicht mitintegriert werden. Diese Maßnahme trägt - wie sich im weiteren noch zeigen wird - signifikant zu einem wirtschaftlichen Modemkonzept bei.

Die Referenzsignale $Y_i$ sind - wie erwähnt - in einem digitalen Speicher in Form eines ROM, PROM, EPROM, EEPROM oder RAM abgelegt, der von einem zyklischen Zähler adressiert wird, wobei sich alle Referenzwerte in Adreßbereichen gleicher Länge, entsprechend dem Zählerzyklus, befinden, und wobei die Auswahl der gewünschten Referenzwerte z. B. von einem Mikrocontroller aus über Adreßleitungen, die an die höherwertigen Adressen des Speichers führen, erfolgt. Auf diese Weise ist ein digitaler Frequenzsynthesizer für die empfängerseitig benötigten Referenzsignalformen realisiert. Der Mikrocontroller liest nach Ablauf einer Signalformdauer die n Ausgabewerte des Arithmetik-Schaltwerkes ein. Die eingelesenen Werte werden weiterverarbeitet, bis am Ausgang des Mikrocontrollers die gesendete digitale Information bereitsteht.

Ein wichtiger Grundgedanke der vorliegenden Erfindung besteht darin, unter Mitverwendung des Mikrocontrollers, des Abtastwertspeichers und des mitintegrierten zyklischen Zählers eine zusätzliche Senderfunktion zu realisieren, und so vollständige Modems für bidirektionalen Datenverkehr auf Stromnetzen in Halbduplex-Betrieb zu schaffen. Besonders hervorzuheben ist, daß die erfindungsgemäße Lösung bestechend einfach und kostengünstig ist, weil nur wenige und preisgünstige Komponenten hinzugefügt werden müssen, deren Verschaltung mit dem bestehenden Empfangsteil ohne viel Aufwand durchzuführen ist. Desweiteren sind Modilfikationen der wichtigsten Systemparameter wie Datenrate, Signalform- und Frequenzwahl ohne Hardwareänderungen durchführbar, lediglich der Inhalt des Abtastwertspeichers und das Programm für den Mikrocontroller sind zu ändern.

Eine wichtige Weiterbildung der vorliegenden Erfindung, auf die weiter unten näher eingegangen wird, ist ein Verfahren und eine Einrichtung zur intelligenten Präambel- und Empfangsdatendetektion, die in eleganter Weise im ohnehin vorhandenen Mikrocontroller hard- und softwaremäßig implementiert werden kann.

Ausführungsbeispiele der Erfindung sind in den Zeichnungen dargetellt und werden im folgenden näher beschrieben. Es zeigen:

Fig. 1    ein Modem mit Sender und Empfänger,

Fig. 2    eine Einrichtung zur intelligenten Präambel- und Empfangsdatendetektion.

Zur anschaulichen Erläuterung der Erfindung wird eine Einrichtung, die als Modem (Kurzwort für Modulator-Demodulator) bezeichnet wird, und die zur bidirektionalen Übermittlung digitaler Informationen über Stromversorgungsleitungen innerhalb oder außerhalb von Gebäuden - vorwiegend auf der Niederspannungsebene - dient, beschrieben. Die Datenübertragung mit einem derartigen erfindundungsgemäß aufgebauten Modem ist in hohem Maße resistent gegen Störungen auf den Stromversorgungsleitungen und erlaubt trotz der widrigen Übertragungseigenschaften dieser Leitungen eine zuverlässige Kommunikation mit relativ hoher Datenrate, z.B. über 1000 bit/s. Desweiteren ist die gleichzeitige Aktivität mehrerer Modems am selben Stromnetz ohne gegenseitige Störbeeinflussung gewährleistet (Vielfachzugriff auf dasselbe Frequenzband).

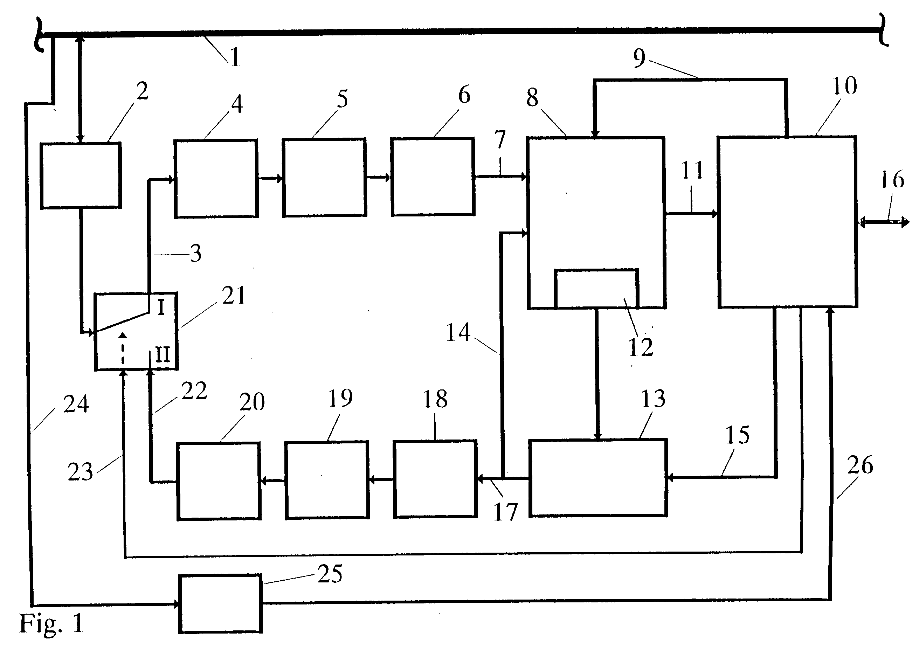

Anhand von Figur 1 wird aus Gründen der Übersicht und Anschaulichkeit die Übertragung binärer Informationen (also ein Strom zufällig aufeinanderfolgender "H"- und "L"-Bits) mit fester Datenrate $r_D = 1/T_B$ unter Einsatz von Frequenzumtastung mit zwei Signalformen der Dauer $T = T_B$ betrachtet. Die Erfindung ist selbstverständlich auch für M-äre Übertragung und Signalformen großer Vielfalt anwendbar. Zur Vorstellung des Grundgedankens wird zunächst anknüpfend an die Darstellungen in der EP 0 507 087 A2 die Funktion des Empfangszweiges vorgestellt, dann wird der Sendezweig erläutert.

Vom Stromnetz 1 gelangen die zu empfangenden Signale über den Koppler 2 und den vom Mikrocontroller 10 gesteuerten Schalter 21 über die Leitung 3 zum eingangsseitigen Bandpaßfilter 4, das Störsignale aus nicht gewünschten Frequenzbereichen unterdrückt. Der Koppler besteht vorzugsweise aus einem mit zwei oder mehr Wicklungen versehenen hochpermeablen Ringkern aus ferromagnetischem Pulver. Auch Schalenkerne und ähnliche Bauformen sind verwendbar. Der Koppler 2 bewirkt die galvanische Trennung zwischen Stromnetz und Modem und stellt gleichzeitig einen Hochpaß dar, der Signale mit Frequenzen bis zu einigen Kilohertz weitgehend vom Modem fernhält. Der Koppler 2 wird sowohl zum Empfangen (Schalter 21 in Position I) als auch zum Senden (Schalter 21 in Position II) benutzt. Das gefilterte Empfangssignal wird nun einem geregelten Verstärker 5 zugeführt, der dafür sorgt, daß der Aussteuerbereich des nachfolgenden Analog/Digitalwandlers 6 stets optimal genutzt wird. Im Analog/Digitalwandler 6 wird die Abtastung und Quantisierung des Empfangssignals durchgeführt und die digitalisierten Werte $X(kT_A)$ werden über das Leitungsbündel 7 an das systolische Arithmetik-Schaltwerk 8 geliefert. Die genaue Arbeitsweise des Arithmetik Schaltwerks 8 ist in der EP 0 507 087 A2 offenbart. Hier werden deshalb nur die für das Verständnis der folgenden Ausführungen wichtigen Zusammenhänge wiederholt.

Jeder digitalisierte Abtastwert X des Empfangssignals am Eingang des systolischen Arithmetik-Schaltwerks 8 wird der Reihe nach mit vier Referenzwerten $Y_{LI}$, $Y_{LQ}$ und $Y_{HI}$, $Y_{HQ}$, die an einem zweiten Eingang über das Leitungsbündel 14 eingespeist werden, multipliziert. Weil dies innerhalb einer Abtastperiode $T_A$ geschehen muß, darf jeder der Referenzwerte nur für die Dauer $T_A/n = T_A/4$ anstehen. Am Chipintervallende kommen die vier gewünschten Komponenten LI, LQ, HL und HQ zur Ausgabe. Sie können in dieser Reihenfolge über das Leitungsbündel 11 in den Mikrocontroller, den Mikroprozessor oder eine Digitalschaltung vergleichbarer Funktion 10 (im folgenden vereinfachend nur Digitalschaltung oder Mikrocontroller genannt) eingelesen werden. Während der Ausgabe der zum gerade abgeschlossenen Chipintervall gehörigen Komponenten LI, LQ, HI und HQ werden ohne Verzug bereits die Anfangswerte der vier Komponenten für das neue Chipintervall im Arithmetik-Schaltwerk 8 gespeichert. Das hier gezeigte Beispiel kann entsprechend den Ausführungen in der EP 0 507 087 A2 problemlos auf M-äre Anwendungen erweitert werden.

Die eingelesenen Ausgangswerte des Arithmetik-Schaltwerkes 8 werden im Mikrocontroller 10 weiterverarbeitet, so daß am bidirektionalen Ausgang 16 die gesendete digitale Information bereitsteht. Findet beispielsweise binäre Übertragung mit Frequenzsprungmodulation statt, und werden m = 3 Signalformen gleicher Dauer T und verschiedener Frequenz eingesetzt, dann sind im Mikrocontroller 10 nach Ablauf eines jeden Chipintervalls jeweils die vom Arithmetik-Schaltwerk 8 kommenden Werte HI, HQ und LI, LQ paarweise geometrisch zu addieren. Für jedes Chip ist durch Vergleich der Ergebnisse dieser Additionen zu ermitteln, ob es einem "H"- oder ein "L"-Datenbit zuzuordnen ist. Nach Ablauf von m = 3 Chipintervallen fällt der Mikrocontroller 10 eine Mehrheitsentscheidung und gibt das Ergebnis über Ausgang 16 als empfangenes Datenbit aus. Die Synchronisationseinrichtung 25 sorgt über den Mikrocontroller 10 mit dem Steuerleitungsbündel 9 dafür, daß am Beginn eines Chipintervalls die Register des Arithmetik-Schaltwerkes 8 entleert sind. Ein Teil des Adreßleitungsbündels 15 dient dazu, die Referenzsignale $Y_i$ passend zu den Abtastwerten X des erwarteten Empfangssignals bereitzustellen. Der Rest des Adreßleitungsbündels ist - wie weiter unten erklärt wird - für den Sendebetrieb vorgesehen.

Die Referenzsignalabtastwerte $Y_i$ sind in dem digitalen Speicher 13, der in Form eines ROM, PROM, EPROM, EEPROM oder RAM realisiert werden kann, abgelegt. Der Speicher 13 wird von dem zyklischen Zähler 12, der vorteilhaft als Bestandteil des anwendungsspezifischen integrierten systolischen Arithmetik-Schaltwerkes 8 realisiert ist, adressiert. Es ist günstig, alle Referenzwerte in Adreßbereichen gleicher Länge abzulegen. Der Zähler 12 hat dann eine feste Länge und er läßt sich aufwandsgünstig integrieren. Die Auswahl der gewünschten Referenzwerte $Y_i$ erfolgt- wie schon erwähnt - vom Mikrocontroller 10 aus in einfacher Weise über einen Teil des Adreßleitungsbündels 15, mit dem ein Teil der höherwertigen Adressen des Speichers 13 ausgewählt wird. Ein weiterer Teil der höherwertigen Adressen des Speichers ist dem Sendebetrieb vorbehalten. Ein entscheidender Vorteil dieses Konzeptes gegenüber anderen Vorgehensweisen, wie sie z. B. der Druckschrift DE 40 01 265 A1 zu entnehmen sind, ist, daß der integrierte Zähler 12 außer dem Takt keine weiteren Steuersignale benötigt. Mit der Vorgabe der Startadresse des auszulesenden Bereiches des Abtastwertspeichers 13 vom Mikrocontroller 10 aus wird der Auslesevorgang gestartet. Der Zähler 12 adressiert zyklisch den gerade aktuellen Speicherbereich solange, bis ein Frequenzwechsel, der das Auslesen eines anderen Speicherbereiches erfordert, durchgeführt wird. Dazu wird über das Adreßleitungsbündel 15 die neue Bereichsadresse an den Speicher 13 übermittelt.

Der Sendebetrieb des Modems wird eingeleitet, indem der Mikrocontroller über die bidirektionale Datenverbindung 16, z. B. einen entsprechenden Befehl und zu sendende Daten erhält. Zunächst wird über die Steuerleitung 23 der Sende/Empfangsumschalter 21 in Position II (Senden) gesetzt. Dann wird über das Adreßleitungsbündel 15 ein Bereich des Speichers 13 ausgewählt, in dem die Abtastwerte der zu sendenden Signalformen abgelegt sind. Das systolische Arithmetik-Schaltwerk 8 geht in einen Wartezustand. Der integrierte Zähler 12 arbeitet dabei weiter. Zur detaillierten Erläuterung wird der Fall einer binären Datenübertragung mit Frequenzumtastung betrachtet. Hierbei werden zwei Signalformen unterschiedlicher Frequenz benötigt, deren Abtastwerte $Z_i$ abhängig von dem gerade zu sendenden Datenbit ("H" oder "L") aus dem Speicher 13 über eine Datenbitdauer auszulesen sind. Die Abtastwerte $Z_i$ gelangen über das Leitungsbündel 17 auf einen Digital/Analogwandler 18, dem ein Rekonstruktionsfilter 19 folgt. Ein Verstärker 20 stellt die nötige Sendefrequenz bereit, und über Leitung 22 gelangt das Sendesignal zum Sende/Empfangsumschalter 21, der sich jetzt in Sendeposition (II) befindet, so daß das Sendesignal über den Koppler 2 ins Stromnetz 1 eingespeist wird. Über die Leitung 24 gelangt die Netzwechselspannung zu einem Nulldurchgangsdetektor 25, der über die Leitung 26 den Programmablauf für das Senden im Mikrocontroller 10 mit der Netzwechselspannung synchronisiert. Um Mehrdeutigkeiten in einem Drehstromnetz auszuschließen, ist es vorteilhaft, den Beginn einer Datenübertragung an einen Nulldurchgang der Netzspannung zu koppeln. Bei Drehstrom ergibt sich dann ein Zeitraster von ca. 3,3 ms, das z. B. von einem im Mikrocontroller 10 integrierten Timer mit den über Leitung 26 signalisierten Netzspannungsnulldurchgängen synchronisiert werden kann. Dieses Zeitraster würde einer Datenrate von 300 bit/s entsprechen. Das bedeutet aber keineswegs, daß andere Datenraten ausgeschlossen sind. An dieser Stelle läßt sich die hohe Flexibilität des erfindungsgemäßen Modemkonzeptes eindrucksvoll verdeutlichen. Wird z. B. die Datenrate $r_D$ = 1200 bit/s gewünscht, dann ist das Basisraster von 3,3 ms in vier gleiche Teile zu je 833,3 $\mu$s zu unterteilen. Senderseitig ist dazu lediglich eine Umprogrammierung des im Mikrocontroller integrierten Timers notwendig. Ein typischer Senderahmen besteht beispielsweise aus einem Präambel-und aus einem Datenfeld, die sich beide in das aus der Netzwechselspannung abgeleitete Zeitraster einfügen. Dabei ist es vorteilhaft, für die Präambel eine hohe Detektionssicherheit vorzusehen, weil ein Entdeckungsverlust der Präambel oder ein Falschalarm, d. h. die irrtümliche Entscheidung des Empfängers auf eine Präambel, zu einer großen Menge verlorener Daten führt. Denn typische Datenfeldlängen für sinnvolle technische Anwendungen sind 100 bit und mehr. Die Aufgabe, eine hohe Entdeckungssicherheit für die Präambel bei gleichzeitig geringer Falschalarmwahrscheinlichkeit zu erzielen, ist sehr komplex. Die erfindungsgemäße Lösung wird im folgenden am Beispiel eines Modem-Konzeptes für 1200 bit/s gezeigt.

Die Sicherheit, empfängerseitig eine gesendete Signalform korrekt zu detektieren, hängt entscheidend von der Energie ab, mit der diese Signalform gesendet wird. Da die zulässige Sendespannung begrenzt ist und zweckmäßigerweise stets bis zum Maximalwert ausgeschöpft werden sollte, kann die Energie einer Signalform nur durch zeitliche Dehnung erhöht werden. Das geschieht bei einem Modem für 1200 bit/s vorteilhaft dadurch, daß die Präambel aus mehreren - z. B. 15 - Abschnitten der Dauer 3,3 ms aufgebaut wird, die im folgenden Präambelchips genannt werden. In diesen Zeitabschnitten werden Signalformen mit zu einem "H" bzw. zu einem "L"-Bit gehörigen Frequenzen quasizufällig nach einem bestimmten Präambelcode aufeinanderfolgend gesendet. Dadurch, daß ein Präambelchip die vierfache Dauer eines Datenbits hat, wird es entsprechend sicherer erkannt. Desweiteren wird für die Präambelzusammensetzung ein Code gewählt, der gute Autokorrelationseigenschaften hat, d. h., nur, wenn nach gesendeter Präambel die Präambelchips weitgehend fehlerfrei und in zeitlich richtiger Position im Empfänger vorliegen, können sie zu einer hohen Korrelationsspitze aufsummiert werden. Mit der Erkennung dieser Spitze weiß der Empfänger, daß er nun die Datendetektion zu beginnen hat. Das kann jetzt unter erheblich günstigeren Randbedingungen geschehen als z. B. zu Beginn einer Übertragung. Denn zum einen hat die automatische Verstärkungsregelung 5 in Figur 1 den Empfangszweig des Modems optimal auf den vorhandenen Empfangspegel eingeregelt, zum anderen hat der im Mikrocontroller 10 in Form von Software implementierte Detektor die gesicherte Vorinformation, daß nun Daten kommen. Er hat jetzt lediglich nach Ablauf eines jeden Bitintervalls der Dauer $T_B$ = 833,3 $\mu$s die vom Arithmetik-Schaltwerk 8 eingelesenen Inhalte der Akkumulatoren für "H"- und "L"-Bit-Zweig miteinander zu vergleichen und auf dasjenige Bit zu entscheiden, für das der größere Akkuinhalt ermittelt wurde. Entscheidend ist dabei, daß kein Vergleich mit irgendeiner aufwendig und grundsätzlich nur sehr ungenau zu bestimmenden Schwelle erforderlich ist. Somit sind auch bei stark schwankendem Empfangspegel - ein an Stromnetzen häufig beobachtetes Phänomen - keine Empfangsfehler zu befürchten, solange der Empfängerdynamikbereich nicht verlassen wird. Durch geeignete Dimensionierung der Verstärkungsregelung 5 kann mit einem 8bit-Analog/Digitalwandler 6 durchaus ein Dynamikbereich von über 80 dB erzielt werden.

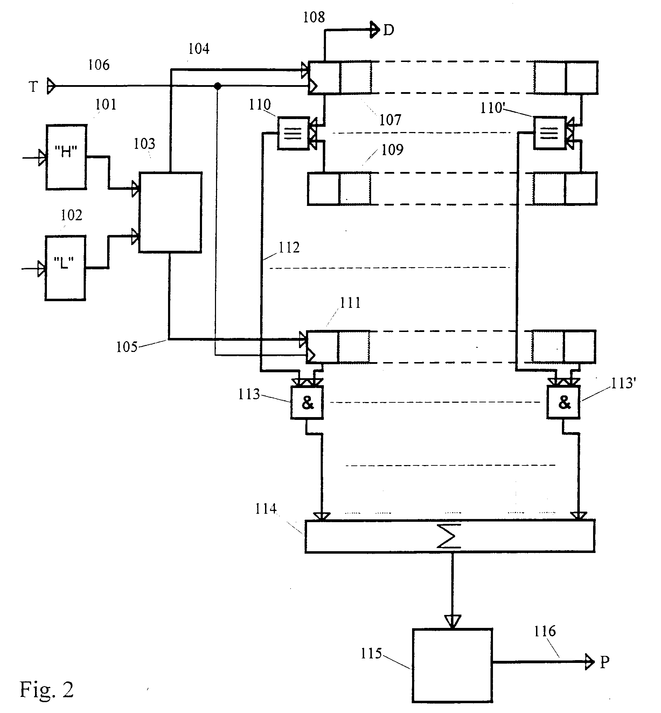

Bei der Präambeldetektion sind die Verhältnisse nicht so einfach. Zunächst besteht die Aufgabe, überhaupt den Beginn einer Datenübertragung zu erkennen. Durch den am Stromnetz ständig vorhandenen Störgeräuschpegel füllen sich die Akkumulatoren im Arithmetik-Schaltwerk 8 stets bis zu einem gewissen Maß. Bei niedrigem Störgeräuschpegel wird die Verstärkungsregelung 5 diesen beträchtlich anheben. Trotzdem muß der Empfänger dadurch nicht zwangsläufig irritiert werden, denn das Störgeräusch ist mit den nachrichtentragenden Signalformen im allgemeinen nicht korreliert und füllt somit alle Akkumulatoren im Arithmetik-Schaltwerk 8 in etwa gleich auf. Ein exakter Größenvergleich der Akkuinhalte in "H"- und "L" -Zweig für eine Präambelchipentscheidung wäre aber problematisch und fehleranfällig, weil leichte statistische Schwankungen der Akkuinhalte sich aus der stochastischen Natur der netzinhärenten Störgeräusche ergeben. Es ist deshalb sinnvoll, eine intelligente Bewertung der Detektionsqualität für jedes einzelne Präambelchip vorzunehmen. Denn die fehlerhafte Detektion mehrerer Chips kann - wie schon erwähnt - gravierende schädliche Folgen nach sich ziehen. Die erfindungsgemäße intelligente Bewertung der Detektionsqualität für jedes Präambelchip wird in folgenden anhand Figur 2 beschrieben.

Für die Betrachtungen wird vereinfachend davon ausgegangen, daß Inphase- und Quadraturkomponenten in "H"- und "L"-Bit-Zweig bereits geometrisch addiert in einem "H"- bzw. in einem "L"-Akkumulator zur Verfügung stehen. Die so definierten Akkumulatoren für das "H"-Bit 101 und für das "L"-Bit 102 liefern ihre Korrelationsergebnisse über eine Chipdauer an den Vergleicher 103. Dieser hat zwei verschiedene Ausgänge 104 und 105. Der Ausgang 104 liefert logisch "1"-Pegel, wenn vom Akkumulator für das "H"-Bit 101 der betragsmäßig größere Wert geliefert wird, anderenfalls liefert der Ausgang 104 logisch "O"-Pegel. Die so ermittelten Ausgangswerte des Vergleichers 103 werden über den Ausgang 104 einem Daten-Schieberegister 107 zugeführt und mit jedem Takt von der Taktleitung 106 eingetaktet. Der Takt entspricht dabei dem Chip- bzw. dem Bittakt. Beim Datenempfang liefert der Ausgang 108 des Daten-Schieberegisters 107 unmittelbar den digitalen Datenstrom. Die weiteren in Figur 2 dargestellten Funktionseinheiten sind zur sicheren Präambeldetektion von Wichtigkeit. Im Referenzregister 109 ist die zeitlich reversierte Präambel als Referenz eingespeichert. Nach Ablauf jedes Chipintervalls während des Präambelempfangs wird Bit für Bit eine Äquivalenzverknüpfung mit den Gattern 110...110' durchgeführt. Die Ergebnisse dieser Verknüpfungen müssen zur Präambelentscheidung aufsummiert werden. Bevor auf diesen entscheidenden Punkt näher eingegangen wir, soll zunächst die grundlegende Arbeitsweise der in Figur 2 dargestellten Blöcke an einem Beispiel verdeutlicht werden. Würde z.B. der Barker-Code der Länge 13 als Präambel gewählt, dann enthielte das Register 109 folgende Werte:

| Register 109 | 1 | 0 | 1 | 0 | 1 | 1 | 0 | 0 | 1 | 1 | 1 | 1 | 1 |

Für die weiteren Betrachtungen sei angenommen, daß die Präambel bis auf ein Chip vollständig empfangen sei. Dann enthält das Daten-Schieberegister 107, z. B. die dargestellten Werte (das fehlende Chip ist mit (x) gekennzeichnet):

| Register 107 | 0 | 1 | 0 | 1 | 1 | 0 | 0 | 1 | 1 | 1 | 1 | 1 | x |

Die Äquivalenzverknüpfung liefert bei bitweiser Übereinstimmung jeweils den Wert logisch "1", ansonsten "O". Der Tatsache, daß noch ein Chip der Präambel fehlt, wird durch das Zeichen (-) bei der Äquivalenzverknüpfung Rechnung getragen. Eine so gekennzeichnete Bitstelle wird bei der Summation ignoriert. Man erhält dann folgendes Ergebnis:

| Äquivalenz (=) | 0 | 0 | 0 | 0 | 1 | 0 | 1 | 0 | 1 | 1 | 1 | 1 | (-) |

Die Summation kann nun in einfacher Weise durch Gewichten der "1"-Bits im obigen Register mit +1 und Aufaddieren geschehen. Dann erhält man als Summe 6 im obigen Beispiel.

Wird im nächsten Intervall jetzt das letzte Präambelchip korrekt detektiert, wird der Inhalt im Daten-Schieberegister 107 um eine Stelle nach rechts geschoben, und eine neu "1" wird eingeschrieben. Jetzt liefert die Summation nach Äquivalenzverknüpfung den Wert 13, entsprechend der Präambellänge. Zu diesem Zeitpunkt ist eine Präambel entdeckt, und alle nachfolgend vom Vergleicher 103 über Leitung 104 gelieferten Informationen werden als "Nutzdaten" interpretiert. Der Barker-Code ist ein Beispiel für einen Code mit hervorragenden Korrelationseigenschaften bei der nichtperiodischen Korrelation - wie sie hier vorliegt. Er liefert bei der beschriebenen Art der Aufsummierung stets Korrelationswerte zwischen 5 und 7, sobald eine Verschiebung um mindestens ein Chip vorliegt. Zur Verdeutlichung betrachte man folgende zusätzliche Beispiele mit drei und zwei Chips Verschiebung:

| Register 109 | 1 | 0 | 1 | 0 | 1 | 1 | 0 | 0 | 1 | 1 | 1 | 1 | 1 |
| Register 107 | 0 | 1 | 1 | 0 | 0 | 1 | 1 | 1 | 1 | 1 | x | x | x |
| Äquivalenz(=) | 0 | 0 | 1 | 1 | 0 | 1 | 0 | 0 | 1 | 1 | (-) | (-) | (-) |

Hier fehlen noch drei Präambelchips, die Summation liefert 5.

| Register 109 | 1 | 0 | 1 | 0 | 1 | 1 | 0 | 0 | 1 | 1 | 1 | 1 | 1 |
| Register 107 | 1 | 0 | 1 | 1 | 0 | 0 | 1 | 1 | 1 | 1 | 1 | x | x |
| Äqivalenz(=) | 1 | 1 | 1 | 0 | 0 | 0 | 0 | 0 | 1 | 1 | 1 | (-) | (-) |

Hier fehlen noch zwei Präambelchips, die Summation liefert 6.

Bei obigen Betrachtungen wurde stillschweigend vorausgesetzt, daß dem Empfänger bekannt ist, wieviele Präambelchips bereits gesendet wurden, und daß er diese korrekt detektiert hat. Beide Voraussetzungen sind in der Praxis leider weder einzeln noch zusammen erfüllt. Daraus ergeben sich gravierende Konsequenzen für die Empfängerkonzeption, die in der Regel bislang zu unwirtschaftlich hohem Aufwand oder schlechter Empfangsqualität führten. Die vorliegende Erfindung bietet eine vorteilhafte Lösung für die geschilderte Problematik, und zwar in folgender Weise:

Der Vergleicher 103 verfügt über einen zweiten Ausgang 105, der das Ergebnis eines bewerteten Vergleichs der Inhalte der Akkumulatoren 101 und 102 liefert. Am Ausgang 105 tritt an einem Chipintervallende der Pegel logisch "1" auf, wenn sich die Inhalte der Akkumulatoren 101 und 102 betragsmäßig um einen bestimmten Prozentsatz des Maximalwertes, der bei optimalem Empfang eines Chips auftreten würde, unterscheiden; anderenfalls tritt logisch "O" auf. In der Praxis wird dieser Prozentsatz etwa zwischen 5% und 10% liegen. Der günstigste Wert hängt von der jeweiligen Störumgebung ab. Es ist deshalb vorteilhaft, ihn adaptiv, z. B. abhängig von der empfangenen Störleistung einzustellen. Das kann durch Beobachtung der Akkuinhalte in Sendepausen geschehen. Auf Grund des vorhandenen Störgeräuschs füllen sich beide Akkus mit etwa gleichen Werten auf. Sind diese Werte im Verhältnis zum Maximalwert bei optimalem Empfang eines Präambelchips sehr klein, dann wird die obengenannte Schwelle in der Gegend von 5% gewählt. Mit wachsendem störbedingtem Akkuinhalt wird die Schwelle in Richtung 10% verschoben. Schwellenwerte weit über 10% haben sich in der Praxis als wenig sinnvoll erwiesen. Die Leitung 105 liefert die bewerteten Vergleichsergebnisse an den Eingang eines Bewertungs-Schieberegisters 111, wo sie mit dem Chiptakt von Leitung 106 eingetaktet werden. Somit ist zu jedem Chip, das in das Daten-Schieberegister 107 gelangt, die zugehörige Bewertung im Bewertungs-Schieberegister 111 abgebildet. Wenn das Chip sicher empfangen wurde (große Differenz der Akkuinhalte), dann steht im Bewertungs-Schieberegister 111 eine "1", ansonsten eine "O". Der Inhalt des Bewertungs-Schieberegisters 111 dient nun erfindungsgemäß dazu, eine sichere Unterscheidung zwischen Empfang von Nutzsignalen und Störgeräusch zu ermöglichen. Das geschieht, indem die Ergebnisse der Äquivalenzverknüpfungen aus den Gattern 110...110' jeweils mit den entsprechenden Stellen aus dem Bewertungs-Schieberegister 111 in den Gattern 113...113' UND-verknüpft werden, bevor die Summation im Addierwerk 114 durchgeführt wird. Das Additionsergebnis wird einem Schwellwertentscheider 115 zugeführt, der über die Leitung 116 meldet, wenn eine Präambel vollständig empfangen wurde. Beim Auftreten dieser Meldung ist der Empfänger synchronisiert und wertet die über Leitung 108 aus dem Daten-Schieberegister 107 kommende Nutzinformation aus.

Bei der Festlegung der Schwelle für den Entscheider 115 ist es nicht ratsam, die ganze Präambellänge (in obigem Beispiel 13) zu wählen. Bei hohem Störpegel und/oder großer Dämpfung des Nutzsignals kann es vorkommen, daß einerseits der Empfang eines oder mehrerer Präambelchips vorgetäuscht wird, obwohl nur Störung vorhanden war, und andererseits Präambelchips, die mit sehr geringem Pegel am Empfänger ankommen, irrtümlich als nicht gültig eingestuft werden. Bei einer Präambellänge von 13 Chips ist es deshalb in der Praxis sinnvoll, die Schwelle im Entscheider 115 auf Werte zwischen 9 und 11 einzustellen. Eine adaptive Einstellung ist möglich, erscheint dem Erfinder aber nur bei größeren Präambellängen lohnend.

Die erfindungsgemäße Realisierung einer Detektionsschaltung nach Figur 2 bietet im Empfangszweig eines Modems zur Informationsübertragung über Stromnetze eine hohe Präambel-Detektionssicherheit ohne aufwendige und kritische Manipulationen von Schwellwerten. Alle Operationen nach Figur 2 werden rein digital ausgeführt, somit entfallen Bauteilselektion und Abgleichmaßnahmen. Die Operationen nach Figur 2 können problemlos in "Echtzeit" in einem Standard-8bit-Mikrocontroller implementiert werden. Da ein solcher Mikrocontroller ohnehin in der Regel Bestandteil eines Modems nach Figur 1 ist, ergibt sich erfindungsgemäß eine rundum vorteilhafte Lösung.

## Patentansprüche

1. Verfahren, bei dem, zur bidirektionalen Übertragung digitaler Informationen über Stromversorgungsnetze im Halbduplex-Betrieb mittels schmalbandiger oder bandspreizender Modulation, das Empfangssignal mit geeigneter Abtastfrequenz abgetastet und digitalisiert wird und zur korrelativen Verarbeitung das Empfangssignal mit Abtastwerten einer Referenzsignalform digital multipliziert und anschließend über die Signalformdauer integriert wird, wobei die Referenzsignalform in einem digitalen Speicher (13) abgelegt ist, der von einem zyklischen Zähler (12) adressiert wird, und wobei die Auswahl der gewünschten Referenzsignalform von einer Digitalschaltung (10), vorzugsweise einem Mikroprozessor oder Mikrocontroller, aus erfolgt, **dadurch gekennzeichnet,** daß senderseitig die Signalformerzeugung digital so durchgeführt wird, daß nach einem Umschalten auf Senden der zyklische Zähler (12) und der Speicher (13) als ein mit der Frequenz der Netzwechselspannung synchronisierter Signalformsynthesizer (12,13) arbeiten und dieser über die gleiche, bereits für das Empfangssignal vorgesehene digitale Steuerschaltung (10) eine aufbereitete Sendeinformation erhält, und daß die digital synthetisierten Sendesignale nach einer Digital/Analog-Wandlung und einer Rekonstruktion der Signalform sowie einer geeigneten Verstärkung in das Stromnetz eingekoppelt werden.

2. Verfahren nach Anspruch 1, dadurch gekennzeichnet, daß vor der Digitalisierung des Empfangssignals dieses in einem Bandpaß (4) gefiltert und durch einen regelbaren Verstärker (5) in seinem Pegel an den Eingang eines Analog/Digital-Wandlers (6) automatisch angepaßt wird.

3. Verfahren nach mindestens einem der vorhergehenden Ansprüche, dadurch gekennzeichnet, daß eine Präambel- und Empfangsdatendetektion vorgesehen ist und die Präambel aus mehreren als Päambelchips bezeichneten Zeitabschnitten aufgebaut wird und in diesen Zeitabschnitten quasizufällig nach einem bestimmten Präambelcode Signalformen mit zu einem "H"- bzw. zu einem "L"-Bit gehörigen Frequenzen aufeinanderfolgend gesendet werden und für die Präambelzusammensetzung ein Code gewählt wird, der gute Autokorrelationseigenschaften hat.

4. Verfahren nach mindestens einem der vorhergehenden Ansprüche, dadurch gekennzeichnet, daß nach gesendeter Präambel durch Aufsummieren zu einer entsprechend hohen Korrelationsspitze geprüft wird, ob die Präambelchips weitgehend fehlerfrei und in zeitlich richtiger Position im Empfänger vorliegen, und daß der Empfänger diese Korrelationsspitze erkennt und nun die Datendetektion beginnt.

5. Verfahren nach Anspruch 4, dadurch gekennzeichnet, daß eine intelligente Bewertung der Detektionsqualität jedes einzelnen Präambelchips vorgenommen wird und hierzu die Präambel- und Empfangsdetektion so erfolgt, daß die von einem Arithmetik-schaltwerk (8) gewonnenen Korrelationswerte in "H"- und "L"-Bit-Zweig an jedem Chipintervallende betragsmäßig miteinander verglichen werden und bei größerem "H"-Korrelationswert eine logische "1" in ein mit dem Chiptakt getaktetes Daten-Schieberegister (107) - ansonsten eine logische "0" - geschrieben wird und zum anderen die Differenz der Korrelationswerte in "H"- und "L"-Bit-Zweig bewertet und bei hinreichend großer Differenz eine logische "1" in ein ebenfalls mit dem Chiptakt getaktetes Bewertungs-Schieberegister (111) geliefert wird - ansonsten wird dort logisch "0" eingetragen - und wobei anschließend der Inhalt des Daten-Schieberegister (107) bitweise mit dem Inhalt eines Referenzregisters (109), in dem ein zeitlich reversierter Präambelcode fest eingespeichert ist, äquivalenz-verknüpft wird und die Ergebnisse dieser Verknüpfung mit dem Inhalt des Bewertungs-Schieberegisters (111) UND-verknüpft und die resultierenden "1"-Bits aufsummiert werden und in einer Schwellwertentscheidung über das Vorliegen einer Präambel entschieden wird.

6. Verfahren nach Anspruch 5, dadurch gekennzeichnet, daß die Bewertung der Korrelationswerte in "H"- und "L"-Bit-Zweig adaptiv in Abhängigkeit von einer vorhandenen Störsignalart und -intensität erfolgt, und daß bei der Schwellwertentscheidung der Schwellwert adaptiv entsprechend der empfangenen Nutzsignalenergie und Störleistung variiert wird, um die Entdeckungswahrscheinlichkeit einer Präambel bei gleichzeitig möglichst geringer Falschalarmwahrscheinlichkeit zu optimieren.

7. Verfahren nach mindestens einem der vorhergehenden Ansprüche 5 oder 6, dadurch gekennzeichnet, daß bei Signalisierung einer Präambeldetektion unmittelbar die Datendetektion beginnt und der informationstragende digitale Datenstrom aus dem Daten-Schieberegister (107) entnommen und von der Digitalschaltung (10) weiterverarbeitet und in Form empfangener Nutzdaten über einen seriell asynchronen bidirektionalen Ausgang (16) an eine beliebige Datensenke geliefert wird.

8. Einrichtung zur bidirektionalen Übertragung digitaler Informationen über Stromversorgungsnetze im Halbduplex-Betrieb mittels schmalbandiger oder bandspreizender Modulation, mit einem Empfänger, zu dem ein systolisches Arithmetik-Schaltwerk (8), ein Zähler (12), ein digitaler Speicher (13), eine Synchronisiereinrichtung (25) und eine Digitalschaltung (10), vorzugsweise ein Mikroprozessor oder Mikrocontroller, gehören, **dadurch gekennzeichnet,** daß der Empfänger mit weiteren, zu einem Sender erforderlichen Baugruppen zu einem Modem zusammengefaßt ist und ein von der Digitalschaltung (10) gesteuerter Sende/Empfangsumschalter (21) ein Umschalten von Empfang auf Senden ermöglicht und die von einem Stromnetz (1) kommenden oder dorthin gehenden Signale über einen gemeinsamen Koppler (2) geführt sind.

9. Einrichtung nach Anspruch 5, dadurch gekennzeichnet, daß für den Empfangsbetrieb ein Signalzweig gebildet ist, bei dem die Signalformen vom Stromnetz (1) über den Koppler (2), den mittels einer Steuerleitung (23) gesteuerten Sende/Empfangsumschalter (21), ein Bandpaßfilter (4), einen geregelten Verstärker (5) und einen Analog/Digitalwandler (6) und über eine Leitung (7) an das Arithmetik-Schaltwerk (8) gelangen, zu dem von einem digitalen Speicher (13) über eine weitere Leitung (14) Abtastwerte Yi einer Referenzsignalform kommen und dessen Ausgang über eine Verbindung (11) an der Digitalschaltung (10) angeschlossen ist und diese ihrerseits an einem bidirektionalen Ausgang (16) die Empfangsdaten bereitstellt.

10. Einrichtung nach Anspruch 8 oder 9, dadurch gekennzeichnet, daß für den Sendebetrieb ein Signalzweig gebildet ist, der die Signalformen mit Hilfe eines mit dem Empfänger gemeinsamen Zählers (12) und digitalen Speichers (13) erzeugt, wobei Zähler (12) und digitaler Speicher (13) als ein durch die Synchronisiereinrichtung (25) mit der Frequenz der Netzwechselspannung synchronisierter Signalformsythesizer (12,13) arbeiten, der gesteuert über eine Verbindung (15) von der Digitalschaltung (10), Abtastwerte Zi von den zu sendenden Signalformen über eine weitere Verbindung (17) an einen Digital/Analogwandler (18) weitergibt, so daß die über die bidirektionale Verbindung (16) an die Digitalschaltung (10) gelieferte digitale Information in Form zugeordneter Signalformen über ein Rekonstruktionsfilter (19), einen Sendeverstärker (20), den Sende/Empfangsumschalter (21) und den Koppler (2) in das Stromnetz (1) gelangt.

11. Einrichtung nach mindestens einem der vorhergehenden Ansprüche 8 bis 10, dadurch gekennzeichnet, daß unter Nutzung der vom Arithmetik-Schaltwerk (8) gelieferten Ausgangswerte in der Digitalschaltung ein intelligentes Präambel- und Datendetektionssystem aufgebaut ist und hierbei ein Vergleicher (103) die Inhalte zweier Akkumulatoren (101) und (102) an jedem Chipintervallende betragsmäßig miteinander vergleicht und eine Leitung (104) immer dann eine logische "1" in ein Daten-Schieberegister (107) liefert, wenn der Inhalt von Akkumulator (101) größer als der von Akkumulator (102) ist - ansonsten wird logisch "0" eingeschrieben -, und der über eine Leitung (105) immer dann eine logische "1" am Chipintervallende in ein Bewertungs-Schieberegister (111) einschreibt, wenn die Differenz der Akkumulatorinhalte betragsmäßig einen vorgegebenen Prozentsatz vom maximal möglichen Inhalt übersteigt, und wobei an jedem Chipintervallende jedes Bit des Daten-Schieberegisters (107) mit einem entsprechenden Bit in einem Referenzregister (109), in dem der Präambelcode zeitlich reversiert gespeichert ist, mit Äquivalenzgattern (110) ... (110') verknüpft und die Ergebnisse dieser Verknüpfungen wiederum bitweise mit den ensprechenden Bits aus dem Bewertungs-Schieberegister (111) in UND-Gattern (113) ... (113') verknüpft werden und schließlich die resultierenden "1"-Bits in einem Addierer (114) aufsummiert werden, so daß an jedem Chipintervallende ein Schwellwertentscheider (115) prüfen kann, ob eine Präambel vollständig empfangen wurde und im folgenden Nutzdaten zu erwarten sind.

12. Einrichtung nach mindestens einem der vorhergehenden Ansprüche 8 bis 11, dadurch gekennzeichnet, daß die der Präambeldetektion folgende Datendetektion über eine vom Daten-Schieberregister (107) ausgehende Leitung (108) erfolgt und daß sowohl die Präambeldetektion als auch die Datendetektion in der Digitalschaltung in Form von Hard- und Software implementiert sind und hierbei die Empfangsdaten über eine bidirektionale, serielle Schnittstelle (16) asynchron an eine beliebige Datensenke lieferbar sind.

13. Einrichtung nach mindestens einem der Ansprüche 8 bis 12, dadurch gekennzeichnet, daß im Arithmetik-Schaltwerk (8) ein zyklischer Zähler (12) integriert ist, der zusammen mit dem digitalen Speicher (13) in Form eines ROM, PROM, EPROM, oder EEPROM den digitalen Signalformsynthesizer sowohl für Empfangs- als auch für Sendebetrieb bildet, wobei die Abtastwerte der zu synthetisierenden Signalformen jeweils in Adreßbereichen fester und vorzugsweise gleicher Länge abgelegt sind.

14. Einrichtung nach mindestens einem der Ansprüche 8 bis 13, dadurch gekennzeichnet, daß im Arithmetik-Schaltwerk die Baugruppen des intelligenten Präambel- und Datendetektionssystems mitintegriert sind, so daß am Ausgang des derart modifizierten Arithmetik-Schaltwerkes eine Präambeldetektion signalisiert wird, und an einem weiteren Ausgang der empfangene Nutzdatenstrom bereitsteht.

15. Einrichtung nach mindestensd einem der Ansprüche 8 bis 14, dadurch gekennzeichnet, daß das Arithmetik-Schaltwerk (8), der Analog/Digitalwandler (6), der Digital/Analogwandler (18), der Zähler (12), der Festwertspeicher (13) und die Digitalschaltung (10) in einer anwendungsspezifischen integrierten Schaltung untergebracht sind.

Fig. 1

EP 0 634 842 A2

Fig. 2